(19) Europäisches Patentamt
European Patent Office
Office européen des brevets

(11) **EP 3 904 066 A1**

(12) **EUROPEAN PATENT APPLICATION**
published in accordance with Art. 153(4) EPC

(43) Date of publication:
03.11.2021 Bulletin 2021/44

(51) Int Cl.:
**B29K 101/12** (2006.01)  **B29K 105/08** (2006.01)
**B29K 105/12** (2006.01)  **B29C 43/34** (2006.01)
**B29C 70/06** (2006.01)  **B29C 70/42** (2006.01)

(21) Application number: 19905961.9

(22) Date of filing: 23.12.2019

(86) International application number:
**PCT/JP2019/050301**

(87) International publication number:
**WO 2020/137948 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 25.12.2018 JP 2018241376

(71) Applicant: **Teijin Limited**
**Osaka 530-0005 (JP)**

(72) Inventors:
• OHKI ,Takeru
**Osaka 530-0005 (JP)**
• KITAGAWA, Masahiro
**Osaka 530-0005 (JP)**
• YAMAGUCHI, Takashi
**Osaka 530-0005 (JP)**

(74) Representative: **Epping - Hermann - Fischer Patentanwaltsgesellschaft mbH Schloßschmidstraße 5 80639 München (DE)**

(54) **FIBER-REINFORCED THERMOPLASTIC RESIN MOLDED BODY AND METHOD FOR MANUFACTURING SAME**

(57) Provided are a molded body and a method for manufacturing a molded body, the molded body comprising: reinforced fibers having a weight average fiber length of 1 mm or more and 100 mm or less; and a thermoplastic resin, wherein the molded body is provided with a first main shape surface part, a second main shape surface part connected to the first main shape surface part in a crossing state, and a connection surface part connected to both the first main shape surface part and the second main shape surface part, the connection surface part protrudes from the first main shape surface part and the second main shape surface part on a valley side formed by the first main shape surface part and the second main shape surface part, and reinforced fibers are continuously dispersed in an in-plane direction at a boundary region between the first main shape surface part and the connection surface part and a boundary region between the second main shape surface part and the connection surface part.

FIG.1

**Description**

TECHNICAL FIELD

The present invention relates to a molded body containing reinforcing fibers and a thermoplastic resin, that is, a fiber-reinforced thermoplastic resin molded body, and a method for producing the same.

BACKGROUND ART

As a method of producing a molded body by molding a molding material of a fiber-reinforced resin containing reinforcing fibers such as carbon fibers and a thermoplastic resin as a matrix, for example, there has been known so-called stamping molding in which a heat-softened molding material is brought into contact with a lower mold and an upper mold and press-molded. In the method of producing a molded body, a molded body having a desired shape can be obtained by filling a cavity formed by the upper mold and the lower mold with the molding material and molding the molding material.

Regarding a method of producing a molded body by stamping molding, for example, in Patent Literatures 1 and 2, in order to prevent, when a heat-softened molding material is brought into contact with a lower mold, cooling and solidification from being promoted due to heat being taken away by a mold, the molding material is placed on upper end surfaces of a plurality of placement pins that can be raised and lowered from a lower molding surface, thereby preventing the molding material from being brought into contact with a cavity forming surface and being cooled prior to mold clamping of the mold. In Patent Literature 3, in order to produce a molded body which has a three-dimensional shape but is excellent in appearance without wrinkles or the like and does not have weld lines at corners or the like, it is proposed that when a molding material is bent (preliminarily shaped) and placed on a mold for press molding, specific regions are overlapped and press-molded.

On the other hand, Patent Literature 4 describes a method of molding a heat-softened thermoplastic resin sheet in a mold while gripping the thermoplastic resin sheet by a clamp so as to reduce uneven thickness of a molded article and increase a thickness of four corners of the molded article as much as possible when the thermoplastic resin sheet is molded.

CITATION LIST

PATENT LITERATURE

Patent Literature 1: JP-A-2016-43639
Patent Literature 2: JP-A-2016-3 6963
Patent Literature 3: WO 2017/110811
Patent Literature 4: JP-A-H10-76570

SUMMARY OF INVENTION

TECHNICAL PROBLEM

However, in the producing methods described in Patent Literatures 1 and 2, since the placement pin protruding from a molding cavity surface of the lower mold (a surface of the lower mold on which the molded body is formed by press molding, hereinafter, simply referred to as a molding lower surface) are used, a surface of the molding material in contact with the placement pin is cooled and solidified, tension is not sufficiently applied to the molding material, and removal of wrinkles generated in molding processing is not sufficient. Further, although the placement pin can be moved in a vertical direction (a direction in which the mold is closed), the placement pin cannot be moved in a horizontal direction, so that there is a limit to a design that can be molded.

In the producing method described in Patent Literature 3, it is necessary to pattern-cut the molding material in advance, which inevitably results in generation of scrap material. Further, since it is necessary to accurately place the molding material at a target position, and a mechanism for imparting tension to the molding material at the time of molding becomes too complicated, there is a tendency to give up control of the tension of the molding material.

In the producing method described in Patent Literature 4, since a line (one side of the molding material) of the thermoplastic resin sheet as the molding material is gripped, the molding material is easily broken. A height difference of the molding cavity is only in one direction, and molding can be performed when the molding material is gripped by a clamping mechanism along the height difference of the molding cavity, but molding is difficult when a cavity is used in which the height difference occurs in two or more directions in the mold. In other words, when the molding cavity has a complicated shape having a height difference in two or more directions, wrinkles in an in-plane direction generated during molding cannot be removed. Further, since the molding method relies on stretchability of the thermoplastic resin, the molding method involves unevenness of a thickness, a stretching limit is low in the case of a molding material containing carbon fibers and a thermoplastic resin, and in the molding method described in Patent Literature 4, the molding material is broken.

Accordingly, an object of the present invention is to provide a molded body excellent in design by producing a molded body while preventing cooling of a heated molding material, and to provide a producing method capable of reducing an amount of a pattern-cut scrap material in producing processing.

SOLUTION TO PROBLEM

In order to solve the above problems, the present invention provides the following solutions.

<1> A molded body containing: reinforcing fibers having a weight average fiber length of 1 mm or more and 100 mm or less; and a thermoplastic resin, the molded body including:

a first main shape surface portion;
a second main shape surface portion connected to the first main shape surface portion in a state of intersecting the first main shape surface portion; and
a connection surface portion connected to both the first main shape surface portion and the second main shape surface portion, the connection surface portion protruding from the first main shape surface portion and the second main shape surface portion on a side of a valley formed by the first main shape surface portion and the second main shape surface portion, in which
the reinforcing fibers are continuously dispersed in an in-plane direction in a boundary region between the first main shape surface portion and the connection surface portion and a boundary region between the second main shape surface portion and the connection surface portion.

<2> The molded body according to <1>, in which the reinforcing fiber is a carbon fiber.
<3> The molded body according to <1> or <2>, in which the connection surface portion is disposed between two regions where the first main shape surface portion and the second main shape surface portion are connected to each other.
<4> The molded body according to any one of <1> to <3>, in which the reinforcing fibers are continuously dispersed in the in-plane direction in a boundary region between the first main shape surface portion and the second main shape surface portion.
<5> The molded body according to any one of <1> to <4>, in which the reinforcing fibers are continuously dispersed in the in-plane direction in the connection surface portion.
<6> The molded body according to any one of <1> to <5>, in which an angle of the valley formed by the first main shape surface portion and the second main shape surface portion is 45 degrees or more and 135 degrees or less.
<7> The molded body according to any one of <1> to <6>, in which the connection surface portion includes a plurality of planar portions that are bend-connected.
<8> The molded body according to any one of <1> to <7>, in which the connection surface portion includes a curved surface portion.
<9> The molded body according to any one of <1> to <8>, in which a coefficient of variation of thickness is equal to or less than 5.5%.
<10> The molded body according to any one of <1> to <9>, further including:

an edge-shaped surface portion facing the valley at least one of an end portion of the first main shape surface portion and an end portion of the second main shape surface portion, and
the reinforcing fibers are continuously dispersed in the in-plane direction in a boundary region between the edge-shaped surface portion and the first main shape surface portion or the second main shape surface portion.

<11> The molded body according to any one of <1> to <10>, in which molding is performed by using a sheet-shaped molding material.
<12> The molded body according to any one of <1> to <11>, in which an angle of a valley formed by the connection surface portion and at least one of the first main shape surface portion and the second main shape surface portion is more than 90 degrees and less than 180 degrees.

<13> The molded body according to any one of <1> to <12>, in which a maximum value of a protrusion amount of the connection surface portion from a virtual intersection line between the first main shape surface portion and the second main shape surface portion is 10 times or more a thickness of the molded body.

<14> A method for producing a molded body containing reinforcing fibers and a thermoplastic resin, the method including:

placing a heat-softened molding material on a molding material placement portion protruding from a portion other than a cavity forming surface of a lower mold; and
closing an upper mold and a lower mold in a state where at least a part of an outer peripheral region of the molding material placed on the molding material placement portion is fixed to the molding material placement portion to press-mold the molding material.

<15> The method for producing a molded body according to <14>, in which the reinforcing fiber is a carbon fiber having a weight average fiber length of 1 mm or more and 100 mm or less.

<16> The method for producing a molded body according to <15>, in which the molded body is the molded body according to any one of <1> to <13>, and the part of the outer peripheral region of the molding material to be fixed to the molding material placement portion is an outer peripheral region R1 of the molding material corresponding to an end portion of the first main shape surface portion, the end portion facing a portion connected to the second main shape surface portion.

<17> The method for producing a molded body according to <16>, in which the part of the outer peripheral region of the molding material to be fixed to the molding material placement portion is an outer peripheral region R2 of the molding material corresponding to an end portion of the second main shape surface portion, the end portion being substantially orthogonal to a portion where the first main shape surface portion and the second main shape surface portion are connected to each other.

<18> The method for producing a molded body according to <16> or <17>, in which a relation between an average plate thickness Tp of the connection surface portion and an average plate thickness Tm of the molding material satisfies Tp/Tm < 3.

<19> The method for producing a molded body according to any one of <14> to <16>, in which the molding material covers an entire cavity forming surface of the lower mold when the lower mold is viewed in a plan view at a time of placing the molding material on the molding material placement portion.

<20> The method for producing a molded body according to any one of <14> to <17>, in which the molding material placement portion includes a plurality of surfaces, and at least one molding material placement portion is movable in at least one of a horizontal direction and an up-down direction with respect to the lower mold.

<21> The method for producing a molded body according to <20>, in which a height of the molding material placement portion after the movement changes in accordance with a height of the cavity forming surface of the lower mold.

ADVANTAGEOUS EFFECTS OF INVENTION

According to a molded body and a method for producing the same in the present invention, the molded body has almost no weld, and carbon fibers are continuously dispersed in an in-plane direction in a boundary region between the first main shape surface portion and the connection surface portion and a boundary region between the second main shape surface portion and the connection surface portion, so that a weight of the molded body can be reduced with the same mechanical properties as those of the related molded body, and a pattern-cut scrap material in molding processing can be reduced.

Since it is not necessary to prepare the molding material by performing pattern-cut into a complicated shape, it is possible to simplify a conveyance device, and it is possible to stabilize a conveyance system without complicating control of the conveyance device.

Further, in a preferable producing method as one embodiment of the present invention, by preventing contact with a mold until immediately before the molding material is pressurized, a temperature holding time for which molding can be performed can be lengthened, and a degree of freedom in design for which molding can be performed is increased. In other words, it is possible to prevent a molding process from being affected by a change in a temperature environment in the molding processing.

BRIEF DESCRIPTION OF DRAWINGS

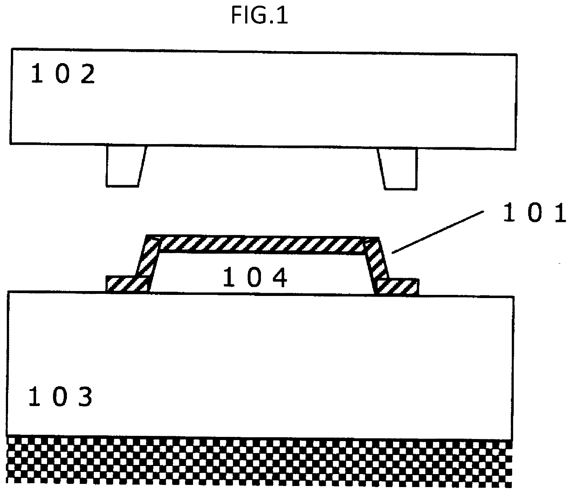

Fig. 1 is a schematic view showing a state where a molding material is preliminarily shaped along a lower mold before press molding.

Fig. 2A is a schematic view (an initial stage of an operation of a molding material placement portion) in which the molding material is placed and press-molded on the molding material placement portion.

Fig. 2B is a schematic view (a later stage of the operation of the molding material placement portion) in which the molding material is placed and press-molded on the molding material placement portion.

Fig. 3A is a schematic view showing an example of a molded body.

Fig. 3B is a schematic view showing an example of a molded body.

Fig. 3C is a schematic view showing an example of a molded body.

Fig. 3D is a schematic view showing an example of a molded body.

Fig. 3E is a schematic view showing an example of a molded body.

Fig. 4 is a schematic view in which a pin-shaped molding material placement portion is provided on the lower mold.

Fig. 5 is a schematic view in which a frame-shaped placement portion installation base is provided on the lower mold.

Fig. 6 is a schematic view in which a molding material placement portion (pin shape) is provided on the frame-shaped placement portion installation base.

Fig. 7 is a schematic view showing a location of the frame-shaped placement portion installation base where a height difference is large.

Fig. 8 is a schematic view in which a height of the frame-shaped placement portion installation base changes in accordance with the height of the cavity forming surface of the lower mold.

Fig. 9A is a schematic view showing an example of an arrangement of the molding material placement portions (pin-shaped) provided on the placement portion installation base when the lower mold is viewed from above.

Fig. 9B is a schematic view showing an example of the arrangement of the molding material placement portions (pin-shaped) provided on the placement portion installation base when the lower mold is viewed from above.

Fig. 9C is a schematic view showing an example of the arrangement of the molding material placement portions (pin-shaped) provided on the placement portion installation base when the lower mold is viewed from above.

Fig. 9D is a schematic view showing an example of the arrangement of the molding material placement portions (pin-shaped) provided on the placement portion installation base when the lower mold is viewed from above.

Fig. 9E is a schematic view showing an example of the arrangement of the molding material placement portions (pin-shaped) provided on the placement portion installation base when the lower mold is viewed from above.

Fig. 10 is a schematic view showing a case where molding is performed without using the molding material placement portion, in which lowering of an upper mold is stopped halfway, and a solidified molding material is taken out and observed.

Fig. 11 is a schematic view showing a case where molding is performed using the molding material placement portion, in which lowering of an upper mold is stopped halfway, and a solidified molding material is taken out and observed.

Fig. 12 is a schematic view showing measurement locations A to H of a plate thickness of the molded body, taking the molded body in Fig. 3B as an example.

Fig. 13 is a schematic view showing an inclination of the lower mold during press molding.

Fig. 14A is a schematic view in which a molding material that has been pattern-cut is cut out from a rectangular material.

Fig. 14B is a schematic view showing a scrap material remaining after the pattern-cut molding material is taken out.

Fig. 14C is a schematic view showing a molding material which is not pattern-cut in a complicated manner.

Fig. 15 is a schematic view showing a state in which carbon fibers are dispersed in an in-plane direction, in which the in-plane direction of the molded body (or the molding material) is an X-Y plane direction, and a Z axis direction is a direction perpendicular to an X-Y plane.

Fig. 16A is a schematic view for illustrating each region of the molded body, taking the molded body in Fig. 3B as an example.

Fig. 16B is a schematic view for illustrating each region of the molded body, taking the molded body in Fig. 3B as an example.

Fig. 16C is a schematic view for illustrating each region of the molded body, taking the molded body in Fig. 3B as an example.

Fig. 16D is a schematic view for illustrating each region of the molded body, taking the molded body in Fig. 3B as an example.

Fig. 16E is a schematic view for illustrating each region of the molded body, taking the molded body in Fig. 3B as an example.

Fig. 17A is an explanatory view of the molded body and an A-B direction.

Fig. 17B is a schematic view of an arrangement of the molding material when observed from a cross-sectional direction in a case where the molded body shown in Fig. 17A is produced, showing a state in which the in-plane direction of the carbon fibers is collapsed as the molding material is folded and the carbon fibers are not continuously dispersed in the in-plane direction in a boundary region between a first main shape surface portion and a connection surface portion (a boundary region between a second main shape surface portion and a connection surface portion).

Fig. 18A is a schematic view showing a case where the molding material is placed on the molding material placement portion.

Fig. 18B is a schematic view showing a pressed molding material.

Fig. 19A is a schematic view showing that a distance between the molding material placement portions is increased and the molding material placement portions are located at positions away from a cavity of the lower mold.

Fig. 19B is a schematic view showing a state in which the upper mold is lowered and the molding material placement portion is moved in a horizontal direction to perform press molding.

Fig. 19C is a state in which the upper mold is lowered and the molding material placement portion is moved in the horizontal direction to perform press molding, and a schematic view showing a state in which operations of the upper mold and the molding material placement portion are further advanced from the state shown in Fig. 19B.

DESCRIPTION OF EMBODIMENTS

[Reinforcing fiber]

A reinforcing fiber according to an embodiment of the present invention is preferably at least one selected from the group consisting of carbon fibers, aramid fibers, and glass fibers. These can be used in combination, and a molded body containing carbon fibers, glass fibers or both glass fibers and carbon fibers among these as reinforcing fibers is particularly preferable because the molded body is lightweight and has excellent strength. Preferable examples of the glass fiber include one or more types of glass selected from the group consisting of E glass, C glass, S glass, D glass, T glass, quartz glass, borosilicate glass, and the like.

[Carbon fiber]

As described above, as the reinforcing fiber used in the present invention, although a type of material is not limited, a carbon fiber is preferable. Although the carbon fiber to be used is not particularly limited, a polyacrylonitrile (PAN)-based carbon fiber is preferably used from the viewpoint of excellent tensile strength. The carbon fiber used in the present invention may have a sizing agent attached to the surface thereof.

[Fiber length of carbon fiber]

The carbon fiber used in the present invention is a discontinuous carbon fiber having a weight average fiber length Lw of 1 mm to 100 mm. The weight average fiber length of the discontinuous carbon fiber is more preferably 3 mm to 80 mm, and still more preferably 5 mm to 60 mm. When the weight average fiber length is 100 mm or less, flowability of the molding material is not decreased, and a desired molded body shape can be obtained during press molding. On the other hand, when the weight average fiber length is 1 mm or more, the mechanical strength of the molded body is not decreased, which is preferable.

[Fiber diameter of carbon fiber]

A single fiber diameter of the carbon fiber used in the present invention may be appropriately determined depending on a type of the carbon fiber, and is not particularly limited. In general, an average single fiber diameter is preferably in a range of 3 $\mu$m to 50 $\mu$m, more preferably in a range of 4 $\mu$m to 12 $\mu$m, and still more preferably in a range of 5 $\mu$m to 8 $\mu$m.

[Volume fraction of reinforcing fiber]

In the present invention, there is no particular limit to a reinforcing fiber volume fraction contained in the molding material (or the molded body), (hereinafter, sometimes referred to as "Vf"), which is defined by the following formula (1), but the reinforcing fiber volume fraction (Vf) is preferably 10 vol% to 60 vol%, more preferably 20 vol% to 50 vol%, and still more preferably 25 vol% to 45 vol%.

$$\text{Reinforcing fiber volume fraction (Vf)} = 100 \times \text{reinforcing fiber volume/(reinforcing fiber volume + thermoplastic resin volume)} \quad \text{Formula (1)}$$

When the reinforcing fiber volume fraction (Vf) in the molding material (or the molded body) is 10 Vol% or more, desired mechanical properties are easily obtained. On the other hand, when the reinforcing fiber volume fraction (Vf) in the molding material (or the molded body) is not more than 60 Vol%, flowability when the molding material is used for press molding or the like is good, and desired mechanical properties are easily obtained. When the reinforcing fibers contained in the molding material or the molded body according to the embodiment of the present invention are mainly carbon fibers, the above Vf may be referred to as a carbon fiber volume fraction.

[Fiber form]

The reinforcing fiber used in the present invention, particularly the carbon fiber, may be only a single filament, may be only a fiber bundle, or may be a mixture of both. When the carbon fibers used in the present invention are in a form of a fiber bundle, the number of single fibers (also referred to as single yarns or the like) constituting each fiber bundle is not particularly limited, but is usually in a range of 1000 to 100000. In general, the carbon fibers are in a form of a fiber bundle in which several thousands to several tens of thousands of single fibers are aggregated. In a case where the carbon fiber is used as the carbon fiber, when the carbon fiber is used as it is, an entangled portion of the fiber bundle becomes locally thick, and it may be difficult to obtain a thin-walled shock absorbing member. Therefore, when the carbon fiber is used as the carbon fiber, the carbon fibers are usually used by widening the fiber bundle or opening the fiber bundle.

[Orientation of reinforcing fiber]

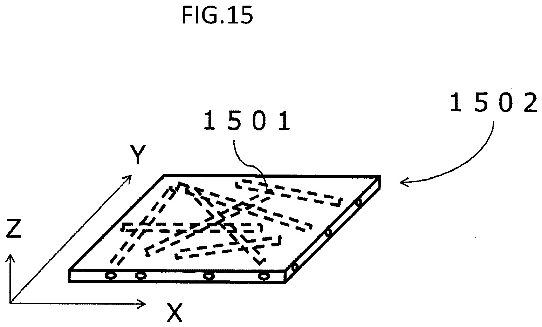

In the molded body according to the present invention, the reinforcing fibers (for example, carbon fibers) are continuously dispersed in an in-plane direction in at least a part of the molded body.
The in-plane direction is a direction orthogonal to a plate thickness direction of the molded body (an X-Y direction in Fig. 15). Fig. 15 schematically shows an example in which discontinuous reinforcing fibers are dispersed in the X-Y direction (in-plane direction) when the in-plane direction of the molded body is taken as an X-Y axis and the plate thickness direction is taken as a Z axis.
In the present invention, a material of the molded body, that is, the reinforcing fibers contained in the molding material are also dispersed in the in-plane direction of the molding material. As long as the reinforcing fibers are dispersed in the in-plane direction, an in-plane orientation is not particularly limited, and the reinforcing fibers may be dispersed while being oriented in a specific direction.
From the viewpoint of the uniformity of the mechanical strength, it is preferable that the reinforcing fibers are not oriented in a specific direction such as one direction, are oriented in a disordered manner, and as a whole, the reinforcing fibers are arranged in a plane of the molding material without exhibiting a specific directivity. When the reinforcing fibers are disorderly dispersed, the molding material is a substantially isotropic molding material having no in-plane anisotropy.
A degree of orientation of the reinforcing fiber is evaluated by determining a ratio of tensile elastic modulus in two directions orthogonal to each other. In any direction of the molding material and a direction orthogonal to the any direction, it is preferable that a ratio (Eδ) obtained by dividing a large value of the measured tensile elastic modulus by a small value is 10 or less. The ratio is more preferably 5 or less, still more preferably 2 or less, and even more preferably 1.3 or less.

[Thermoplastic resin]

The thermoplastic resin used in the present invention is not particularly limited, and a thermoplastic resin having a desired softening temperature can be appropriately selected and used. Unless otherwise specified, the term "thermoplastic resin" as used herein means a thermoplastic resin as a matrix in a composite material, and the expression "containing reinforcing fibers and a thermoplastic resin" means that a molding material or a molded body is formed of a fiber-reinforced thermoplastic resin.
As the thermoplastic resin, a thermoplastic resin having a softening temperature in a range of 180°C to 350°C is generally used, but the thermoplastic resin is not limited thereto.

[Molded body]

The molded body according to the present invention is a molded body containing reinforcing fibers having a weight average fiber length of 1 mm or more and 100 mm or less and a thermoplastic resin, and includes a first main shape surface portion, a second main shape surface portion, and a connection surface portion. The first main shape surface portion and the second main shape surface portion are connected in an intersecting state, and the connection surface portion is connected to both the first main shape surface portion and the second main shape surface portion. The connection surface portion protrudes from the first main shape surface portion and the second main shape surface portion on a side of a valley formed by the first main shape surface portion and the second main shape surface portion. The reinforcing fibers are continuously dispersed in the in-plane direction in a boundary region between the first main shape surface portion and the connection surface portion and a boundary region between the second main shape surface portion and the connection surface portion.

In the boundary region between the first main shape surface portion and the connection surface portion and the boundary region between the second main shape surface portion and the connection surface portion, the reinforcing fibers are continuously dispersed in the in-plane direction, so that the mechanical properties of the portions become uniform, which is preferable.

When the reinforcing fibers are continuously dispersed in the in-plane direction in the boundary region between the first main shape surface portion and the second main shape surface portion, the mechanical properties of the portion become uniform, which is preferable.

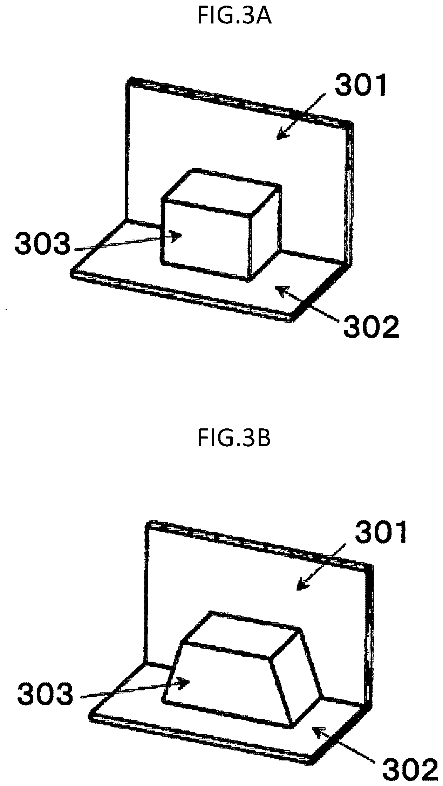

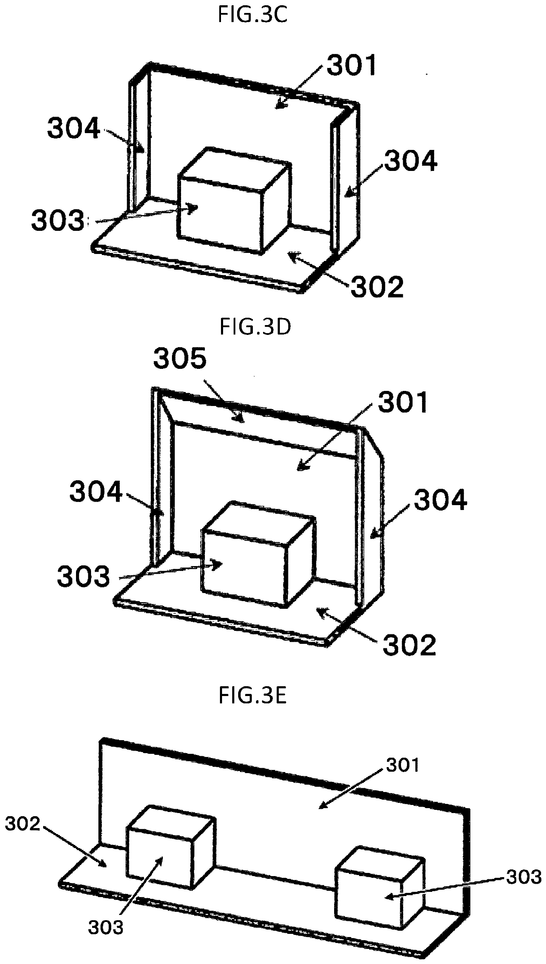

Figs. 3A, 3B, 3C, 3D, and 3E schematically show examples of the molded body. These molded bodies include a planar first main shape surface portion 301, a planar second main shape surface portion 302 connected to the first main shape surface portion 301 in a state of intersecting the first main shape surface portion 301, and a connection surface portion 303 connected to both the first main shape surface portion 301 and the second main shape surface portion 302. The first main shape surface portion 301 and the second main shape surface portion 302 are connected in a bent shape, and an angle of the valley formed by the first main shape surface portion 301 and the second main shape surface portion 302 is approximately 90 degrees.

The connection surface portion 303 is disposed between two regions where the first main shape surface portion 301 and the second main shape surface portion 302 are connected. That is, the connection surface portion 303 is disposed in an intermediate portion between the regions where the first main shape surface portion 301 and the second main shape surface portion 302 are connected. The connection surface portion 303 has a shape in which a plurality of planar members are connected in a bent shape.

The molded bodies shown in Figs. 3A, 3C, and 3D have a shape in which the connection surface portion 303 having the same shape as four surfaces constituting a rectangular parallelepiped is connected to the first main shape surface portion 301 or the second main shape surface portion 302. The molded body shown in Fig. 3B has a shape in which the connection surface portion 303 having the same shape as four surfaces constituting a trapezoidal table is connected to the first main shape surface portion 301 or the second main shape surface portion 302.

The expression "members are connected in a bent shape" does not necessarily mean that the members are strictly bent, and the members may have a Radius portion of an appropriate size.

In the molded body according to the embodiment of the present invention, an angle of a valley formed by the connection surface portion and at least one of the first main shape surface portion and the second main shape surface portion is preferably more than 90 degrees and less than 180 degrees, more preferably more than 90 degrees and less than 135 degrees, and still more preferably more than 90 degrees and less than 120 degrees.

In the molded body according to the embodiment of the present invention, both the angle of the valley formed by the connection surface portion and the first main shape surface portion and the angle of the valley formed by the connection surface portion and the second main shape surface portion may be within the above range.

In the molded bodies shown in Figs. 3A, 3B, 3C, 3D, and 3E, the angle of the valley formed by the first main shape surface portion 301 and the second main shape surface portion 302 is approximately 90 degrees, but the angle is not limited to 90 degrees, and may be any angle, and is preferably 45 degrees or more and 135 degrees or less. The angle of the valley formed by connection surface portion 303 and the first main shape surface portion 301 or the second main shape surface portion 302 may be any angle, and is preferably more than 90 degrees and less than 180 degrees.

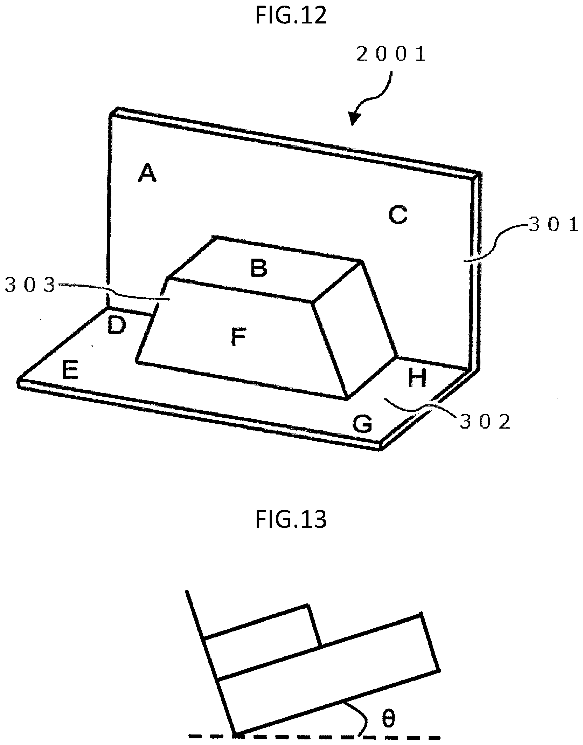

When the angle of the valley formed by the first main shape surface portion and the second main shape surface portion is less than 45 degrees, it is necessary to produce the molded body with the side of the valley formed by the first main shape surface portion and the second main shape surface portion facing vertically downward so as to apply a uniform pressure to the molding material. More specifically, when the angle of the valley is less than 45 degrees, it is necessary to turn the molding shown in Fig. 13 upside down in a paper surface direction, and a surface side of the "valley" is difficult to be used as a design surface because the surface side of the "valley" first comes into contact with a lower mold and is easily solidified. In other words, when the angle of the valley formed by the first main shape surface portion and the second main shape surface portion is 45 degrees or more, it is easy to set the side of the valley as the design surface. By using a heat and cool device or the like, even when the angle of the valley is less than 45 degrees, both surfaces of the molded body can be design surfaces, but the device, conditions, and the like become complicated.

When the angle of the valley formed by the first main shape surface portion and the second main shape surface portion is 135 degrees or less, occurrence of wrinkles can be prevented in the boundary region between the first main shape surface portion and the second main shape surface portion, which is preferable.

The connection surface portion 303 protrudes from the first main shape surface portion 301 and the second main shape surface portion 302 by a distance that makes a meaningful shape as a molded body. Specifically, a maximum value of a protrusion amount of the connection surface portion from a virtual intersection line between the first main shape surface portion and the second main shape surface portion is preferably 10 times or more, more preferably 20 times or more, still more preferably 50 times or more, and particularly preferably 70 times or more a thickness of the molded body. Here, in the molded bodies in Figs. 3A, 3B, 3C, 3D, and 3E, the virtual intersection line is a line connecting bent connection portions of the first main shape surface portion 301 and the second main shape surface portion 302 (a line connecting centers of the rounded portions when the bent portion has the rounded portion). The protrusion amount of the connection surface portion 303 is a distance between any perpendicular line from the virtual intersection line and a point at which the connection surface portion 303 intersects. The meaningful shape as a molded body is usually such that a distance between the perpendicular line of the angle of the valley formed by the first main shape surface portion 301 and the second main shape surface portion 302 in a center direction and the point at which the connection surface portion 303 intersects is 10 times or more the thickness of the molded body, and thus a determination criterion is the perpendicular line in the center direction.

The perpendicular line of the angle of the valley formed by the first main shape surface portion 301 and the second main shape surface portion 302 in the center direction can also be said to be a bisector of the first main shape surface portion 301 and the second main shape surface portion 302.

It is noted that the determination based on perpendicular lines in other directions may be made, or the determination may be made using perpendicular lines in a plurality of directions.

The distance between the virtual intersection line and the connection surface portion 303 is a distance from a center of the material in a thickness direction.

The molded bodies in Figs. 3C and 3D further include, at an end portion of the first main shape surface portion 301 or the second main shape surface portion 302, a planar edge-shaped surface portion facing the side of the valley formed by the first main shape surface portion 301 and the second main shape surface portion 302. The molded body in Fig. 3C includes an edge-shaped surface portion 304 connected to both the end portion of the first main shape surface portion 301 and the end portion of the second main shape surface portion 302. The molded body in Fig. 3D includes the edge-shaped surface portion 304 connected to both the end portion of the first main shape surface portion 301 and the end portion of the second main shape surface portion 302, and an edge-shaped surface portion 305 connected only to the end portion of the first main shape surface portion 301, and the edge-shaped surface portion 304 and the edge-shaped surface portion 305 are connected to each other.

In a boundary region between the edge-shaped surface portions 304 and 305 and the first main shape surface portion 301 or the second main shape surface portion 302, the reinforcing fibers may be continuously dispersed in the in-plane direction. When the reinforcing fibers are continuously dispersed in the in-plane direction, the mechanical properties of the portion become uniform, which is preferable.

When the members are connected to each other in a bent shape, the boundary region is a bent portion, and when the members are connected to each other with the rounded portion, the region including the rounded portion is the boundary region.

Not only in the boundary region, but also in the first main shape surface portion 301, the second main shape surface portion 302, the connection surface portion 303, and the edge-shaped surface portions 304 and 305 which are connected to the boundary region, the reinforcing fibers are continuous in the in-plane direction with the boundary region interposed therebetween, which is preferable. In this case, the reinforcing fibers are continuous in the in-plane direction with the boundary region interposed therebetween from the boundary region to at least a region of a distance of about 30 times a reinforcing fiber length.

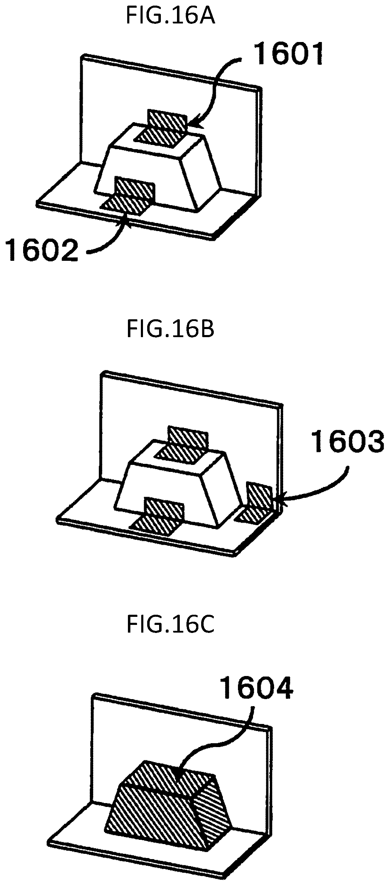

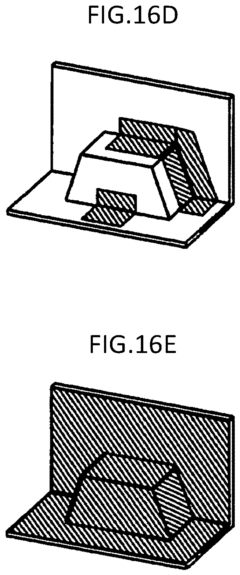

The fact that the reinforcing fibers are continuously dispersed in the in-plane direction in the boundary region means that the reinforcing fibers may be continuously dispersed at least in a part of the boundary region as shown by 1601 and 1602 in Fig. 16A and 1603 in Fig. 16B, and need not be continuously dispersed in an entire boundary region.

Further, as shown in Fig. 16C, when the reinforcing fibers are continuously dispersed in the in-plane direction in the connection surface portion, the mechanical properties of the connection surface portion become uniform, which is preferable.

Although the molded body in which the planar first main shape surface portion and the planar second main shape surface portion are connected in a bent shape and the connection surface portion is disposed between the two regions where the first main shape surface portion and the second main shape surface portion are connected has been described above, the molded body is not limited to such a shape.

A position where the connection surface portion is disposed is not between the two regions where the first main shape surface portion and the second main shape surface portion are connected, and it is sufficient that a connection region is present on at least one side. The number of connection surface portions is not limited to one, and a plurality of connection surface portions may be disposed.

At least one of the first main shape surface portion and the second main shape surface portion may be a curved member. The connection surface portion may include not only a plurality of flat plate members but also a plurality of curved members, or may be formed of only the curved member and have a curved surface shape as a whole. Further, the edge-shaped surface portion provided optionally may be the curved member.

An angle formed when the curved members are connected is an angle formed by a tangent line of each member in the vicinity of the boundary region.

The first main shape surface portion, the second main shape surface portion, the connection surface portion, and the edge-shaped surface portion are not limited to a plate shape, and at least a part of the members may have an uneven portion, a rib, or the like for strength enhancement or the like.

A connection of the first main shape surface portion, the second main shape surface portion, the connection surface portion, and the edge-shaped surface portion is not limited to a bent connection having the rounded portion or not having the rounded portion, and may be a connection via a connection member having any curved surface shape. In this case, the boundary region is a portion including the connection member having a curved surface shape.

The molded body in the present invention may have a shape as shown in Fig. 3E.

[Continuous dispersion region in in-plane direction]

The fact that the carbon fibers are continuously dispersed in the in-plane direction in the boundary region between the first main shape surface portion and the connection surface portion and the boundary region between the second main shape surface portion and the connection surface portion means that the carbon fibers may be continuously dispersed at least in a part as shown by 1601 and 1602 in Fig. 16A, and need not be continuously dispersed in an entire surface.

In the boundary region between the first main shape surface portion and the connection surface portion and the boundary region between the second main shape surface portion and the connection surface portion, the carbon fibers are continuously dispersed in the in-plane direction, so that the mechanical properties of the portions become uniform, which is preferable.

A molded body is preferable in which the carbon fibers are continuously dispersed in the boundary region between the first main shape surface portion and the second main shape surface portion. Specifically, the carbon fibers may be continuously dispersed in a region as shown by 1603 in Fig. 16B.

Further, a molded body is also preferable in which the carbon fibers are dispersed in the in-plane direction on the connection surface portion. Specifically, it is preferable that the carbon fibers are continuously dispersed in a region as shown by 1604 in Fig. 16C.

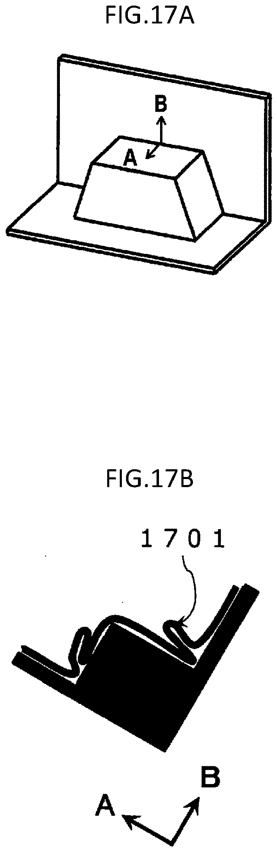

When the carbon fibers are continuously dispersed in the in-plane direction in a certain region, it means that the molding material is folded (for example, 1701 in Fig. 17B) and not press-molded in the region. When press molding can be performed without folding, a weight of the molded body can be reduced, and particularly when the molded body is used for automobile parts or the like, the molded body can contribute to weight reduction.

[Coefficient of variation of thickness of molded body]

It is preferable that the molded body has a more beautiful appearance when the molded body has a small coefficient of variation of thickness. The coefficient of variation of thickness of the molded body is preferably 5.5% or less, more preferably 5.0% or less, and still more preferably 4.5% or less.

A method of measuring the coefficient of variation of thickness will be described later.

[Relation between actual average plate thickness and design plate thickness of molded body]

In the molded body according to the present invention, a value of an actual average plate thickness/a design plate thickness of the molded body is preferably 0.9 or more and less than 1.15, and more preferably 0.95 or more and less than 1.10.

[Method for producing molding material]

The term "molding material" as used herein refers to a material for molding a molded body. The molding material used in the present invention can be produced by using a generally known method. For example, a two-dimensional random array mat as a molding material precursor and a method for producing the same are described in detail in US patent No. 8946342 specification and JP-A-2013-49208.

[Method for producing molded body]

In the molded body in the present invention, it is preferable that the molding material is press-molded by placing the heat-softened molding material on the molding material placement portion protruding from a portion other than a cavity forming surface of the lower mold, and closing the upper mold and the lower mold in a state where at least a part of an outer peripheral region of the molding material placed on the molding material placement portion is fixed to the molding material placement portion.

Although it is preferable to close the upper mold and the lower mold in a fixed state, it is not necessary to maintain the fixed state until the molding is completed.

[Heating of molding material]

A heating temperature of the molding material in production of the molded body is preferably a temperature at which the thermoplastic resin is softened to such an extent that compression molding can be performed, and is not so high as to cause significant thermal decomposition that causes quality abnormality in the molded body.

The heating temperature of the molding material is preferably a temperature equal to or higher than a softening temperature of the thermoplastic resin and equal to or lower than 400°C. When the heating temperature is 400°C or lower, and preferably 350°C or lower, the thermal decomposition of the thermoplastic resin often does not cause quality abnormality in the molded body. Here, the softening temperature of the thermoplastic resin may be a crystal melting temperature, that is, a so-called melting point when the thermoplastic resin is crystalline, and may be a glass transition point when the thermoplastic resin is amorphous.

[Press molding]

As a preferred molding method for producing a molded body using a molding material, press molding (also referred to as compression molding) is used, and a molding method such as hot press molding or cold press molding can be used.

In the present invention, press molding using a cold press is particularly preferable. In the cold press method, for example, after the molding material heated to a first predetermined temperature is put into a mold set to a second predetermined temperature, the molding material is pressurized and cooled.

Specifically, when the thermoplastic resin constituting the molding material is crystalline, the first predetermined temperature is equal to or higher than the melting point (equal to or higher than the crystal melting temperature), and the second predetermined temperature is lower than the melting point (lower than the crystal melting temperature). When the thermoplastic resin is amorphous, the first predetermined temperature is equal to or higher than the glass transition temperature, and the second predetermined temperature is lower than the glass transition temperature. That is, the cold press method includes at least the following steps (A-1) and (A-2).

Step (A-1): A step of heating the molding material to a temperature equal to or higher than the melting point and equal to or lower than a decomposition temperature when the thermoplastic resin is crystalline, and to a temperature equal to or higher than the glass transition temperature and equal to or lower than the decomposition temperature when the thermoplastic resin is amorphous.

Step (A-2): A step of placing the molding material heated in step (A-1) in a mold whose temperature is adjusted to be lower than the melting point (lower than the crystal melting temperature) when the thermoplastic resin is crystalline, and to be lower than the glass transition temperature when the thermoplastic resin is amorphous, and pressurizing the molding material.

By performing these steps, molding of the molding material can be completed.

Each of the steps described above needs to be performed in order described above, but other steps may be included between the steps. The other steps include, for example, before step (A-2), a shaping step of shaping in advance into a shape of a cavity of the mold using a shaping mold different from the mold used in step (A-2). Step (A-2) is a step of applying pressure to the molding material to obtain a molded body having a desired shape. The molding pressure at this time is not particularly limited, is preferably less than 20 MPa, and more preferably 10 MPa or less with respect to a projected area of the cavity of the mold.

As a matter of course, various steps may be inserted between the above steps during press molding, and for example, vacuum press molding in which press molding is performed under vacuum may be used.

[Special problem of cold press method]

When the cold press method is used, the molding material is cooled by the mold in step (A-2). When a cooling rate is high, the molding material is solidified before pressurization, and formability and flowability of the molding material tend to be decreased.

From the viewpoint of the shapeability and flowability of the molding material, it is preferable that the molding material is not cooled immediately before being pressurized, and the temperature at which the molding material is heated in step (A-1) is maintained.

[Cavity forming surface of lower mold]

Generally, the cavity refers to a space portion for forming a shape of a target molded body in a space formed when the upper mold and the lower mold are closed. A volume of the molding cavity is substantially equal to a volume of the target molded body. Therefore, a surface of the lower mold used to form the space portion is referred to as the cavity forming surface of the lower mold in the present invention. On the other hand, a portion other than the cavity forming surface of the lower mold refers to a surface that does not contribute to the formation of the cavity, and is also referred to as a non-cavity forming surface.

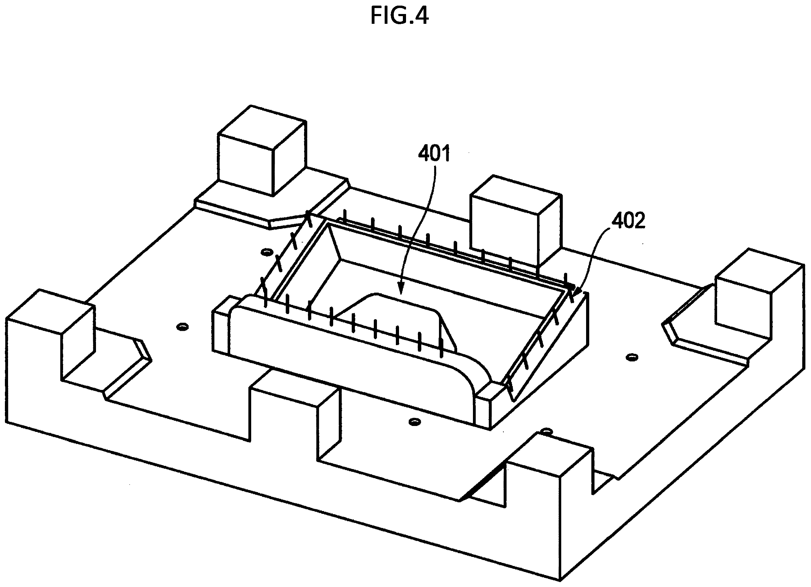

More specifically, reference numeral 401 in Fig. 4 denotes the cavity forming surface of the lower mold, and reference numeral 402 in Fig. 4 denotes the non-cavity forming surface of the lower mold.

[Shape of molding material placement portion]

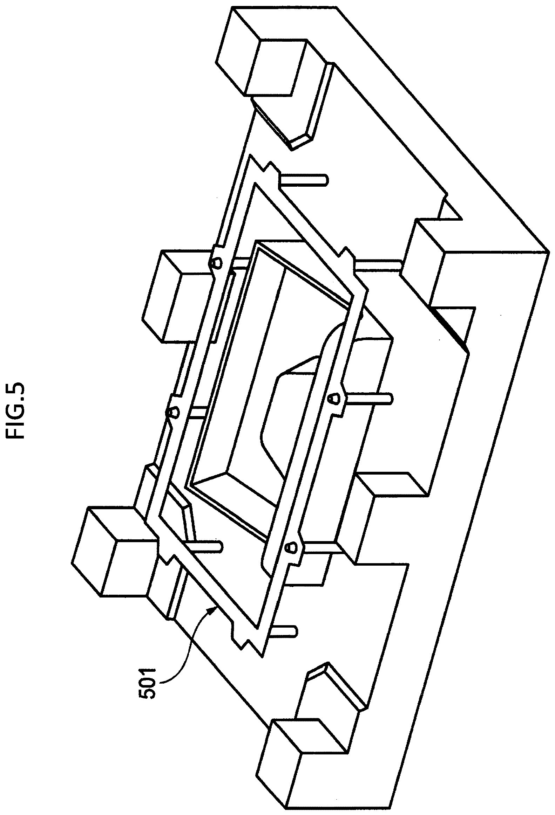

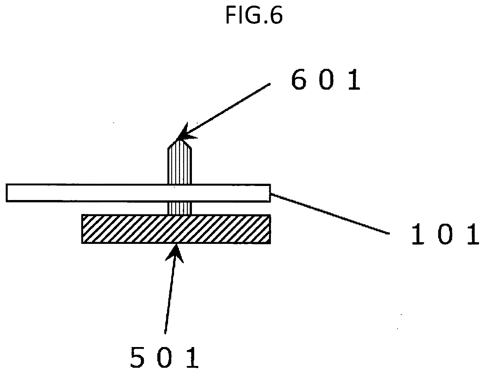

The molding material placement portion may be arranged such that a plurality of pin-shaped molding material placement portions partially protrude as shown by 402 in Fig. 4, or may be arranged so as to surround the cavity forming surface of the lower mold as shown by 501 in Fig. 5, and the molding material placement portion for catching the molding material may protrude from a placement portion installation base (601 in Fig. 6).

The placement portion installation base is a base on which, for example, a pin-shaped molding material placement portion (601 in Fig. 6) is installed.

In the case of using the cold press molding method, by placing the molding material on the molding material placement portion protruding upward from an outside of the cavity forming surface as described above, it is possible to prevent the molding material from coming into contact with the cavity forming surface of the lower mold and being cooled and solidified prior to clamping of the lower mold and the upper mold. At the same time, it is possible to prevent a portion where the flowability is decreased before the pressure is applied to the molding material from being generated, and mold clamping can be performed while the flowability of the entire molding material is satisfactorily maintained. That is, it is possible to apply a sufficient pressing force to the entire molding material uniformly.

In particular, since the molding material placement portion is not disposed so as to protrude from the lower mold cavity, but the molding material placement portion is disposed around the cavity forming surface of the lower mold, an entire surface of the molded body obtained by being brought into contact with the lower mold can be favorably maintained in design.

When the molding material is placed on the molding material placement portion, it is not necessary to avoid contact with the cavity forming surface of the lower mold at all portions of the molding material. That is, a part of the molding material may be in contact with the cavity forming surface of the lower mold so as not to significantly deteriorate the flowability.

[Effects of molding material placement portion]

In the present invention, it is preferable that the molding material is press-molded by placing the heat-softened molding material on the molding material placement portion protruding from a portion other than the cavity forming surface of the lower mold, and closing the upper mold and the lower mold in a state where at least a part of the outer peripheral region of the molding material placed on the molding material placement portion is fixed to the molding material placement portion.

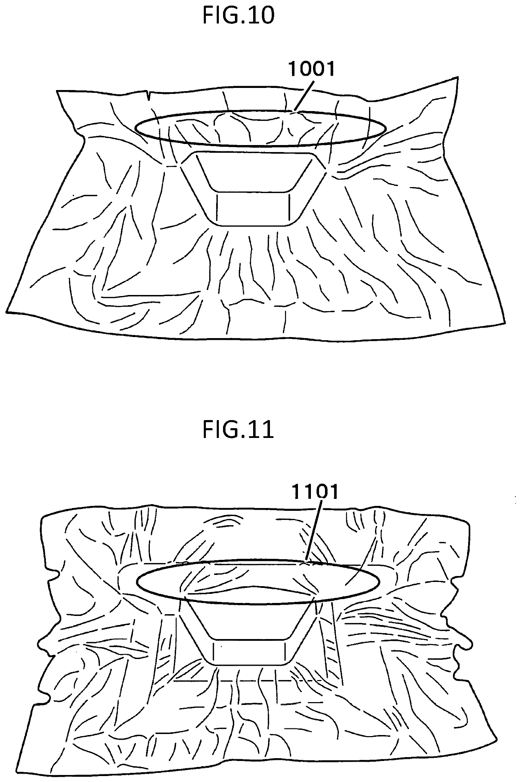

By this operation, when the molding material is press-molded in the cavity, the possibility that the molding material is folded can be reduced. When the outer peripheral region of the molding material is press-molded without being fixed to the molding material placement portion, the molding material tends to slip down and be folded at the connection surface portion as the mold is closed (for example, Fig. 17B or a region 1001 in Fig. 10). When press molding is performed while the molding material is folded, a location where the carbon fibers are three-dimensionally oriented occurs in the boundary region between the first main shape surface portion and the connection surface portion and a connection region between the second main shape surface portion and the connection surface portion of the obtained molded body. That is, when the molding material is folded as shown in Fig. 17B, the carbon fibers are oriented in a B axis direction at a folded portion. In this case, a thickness of the molded body is locally increased, a weight of the molded body is increased, and the mechanical properties become non-uniform or deteriorated. As a result, it is difficult to satisfy requirements for parts such as automobiles that require weight reduction.

By using a preferable molding method in the present invention, it is possible to prevent the molding material from being folded as shown in a region 1101 in Fig. 11.

[Position for fixing molding material to molding material placement portion]

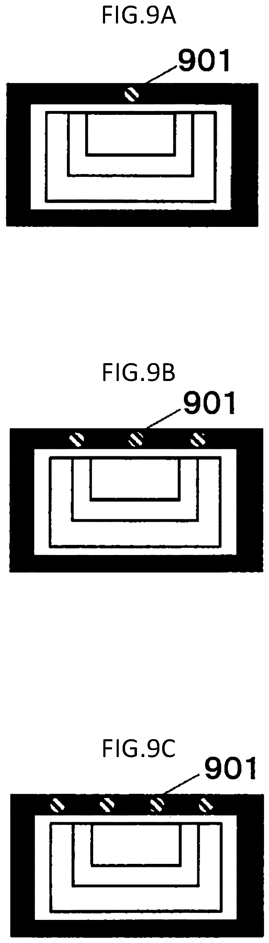

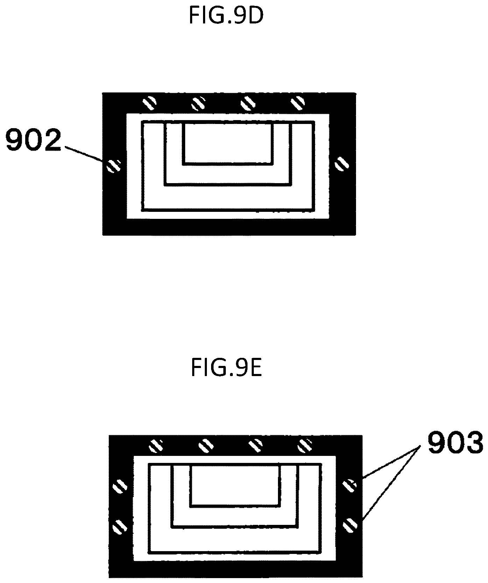

It is preferable that a part of the outer peripheral region of the molding material to be fixed to the molding material placement portion is an outer peripheral region R1 of the molding material corresponding to an end portion of the first main shape surface portion, the end portion facing a portion connected to the second main shape surface portion. Specifically, it is preferable to provide the molding material placement portion at a location shown in 901 in Figs. 9A, 9B, and 9C. Figs. 9A, 9B, 9C, 9D, and 9E are schematic views showing various embodiments of the lower mold shown in Fig. 5 as viewed from above in the vertical direction.

Further, it is preferable that a part of the outer peripheral region of the molding material to be fixed to the molding material placement portion is an outer peripheral region R2 of the molding material corresponding to an end portion of the second main shape surface portion, the end portion being substantially orthogonal to a portion where the first main shape surface portion and the second main shape surface portion are connected to each other. Specifically, it is preferable to provide the molding material placement portion at a location shown in 902 in Fig. 9D or 903 in Fig. 9E.

[Operation of molding material placement portion]

It is preferable that the molding material placement portion includes a plurality of surfaces, and at least one molding material placement portion is movable in at least one of a horizontal direction and an up-down direction with respect to the lower mold.

(1) Vertical direction

As long as the molding material can be moved in a vertical direction, the molding material can be placed on the molding material placement portion without coming into contact with the lower mold even in the case of producing a molded body having a small protrusion amount of the connection surface portion by using a large molding material.

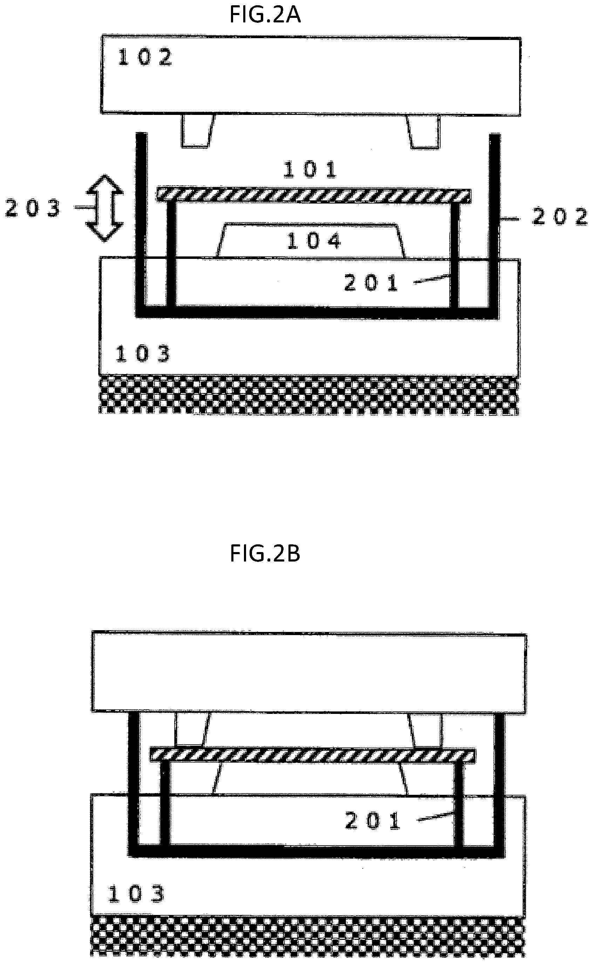

A specific operation in the vertical direction will be described with reference to Figs. 2A and 2B. Objects 201 and 202 in Fig. 2A are movable in a direction indicated by an arrow 203 (up-down direction). After the molding material is placed with a tip end of 201 as a placement base, the upper mold is lowered to come into contact with 202, and is interlocked with 201, so that the placement base (tip end of 201) is lowered as shown in Fig. 2B.

In particular, when a relation between a maximum projection distance L of the lower mold and a creepage distance L2 of the lower mold between the two points satisfies $L1 \times 1.1 < L2$, the molding material may be broken, but the problem can be remarkably solved by the above configuration. When $L1 \times 1.3 < L2$ is satisfied, the problem can be solved more remarkably.

(2) Horizontal Direction

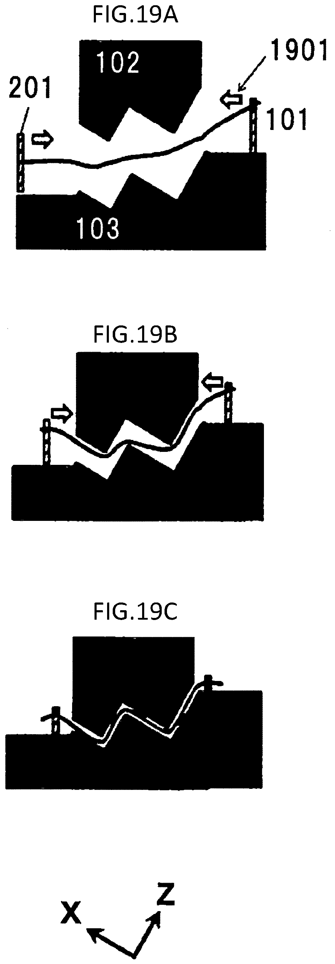

When the molding material placement portion can be moved in the horizontal direction, an interval between the molding material placement portions can be widened as shown in Fig. 19A, and when the molding material is placed on the molding material placement portion, the molding material is less likely to come into contact with the molding surface of the lower mold. After the molding material is placed, as the lower mold and the upper mold are closed, the molding material placement portion is moved so as to approach a lower mold molding cavity, so that the molding material is not extended more than necessary by the upper mold.

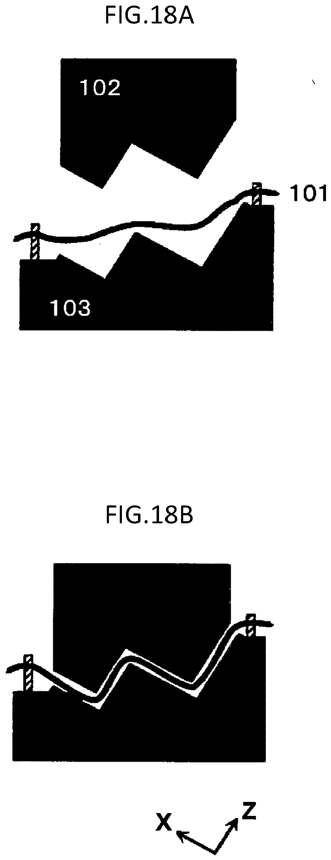

A specific operation in the horizontal direction will be described with reference to Figs. 18A and 18B, and Figs. 19A, 19B, and 19C. As shown in Figs. 18A and 18B, when the molding material placement portion is first brought close to the lower mold cavity to mold, the molding material is partially extended and molded. On the other hand, as shown in Figs. 19A, 19B, and 19C, the molding material can be molded without being partially extended by an operation in which the molding material placement portion located at a position far from the lower mold cavity in the up-down direction and the horizontal direction approaches the lower mold cavity as the upper mold is closed. As a result, partial breaking of the molding material can be prevented. Reference numeral 1901 in Fig. 19A denotes an arrow indicating that the molding material placement portion approaches the lower mold cavity.

[Height of molding material placement portion]

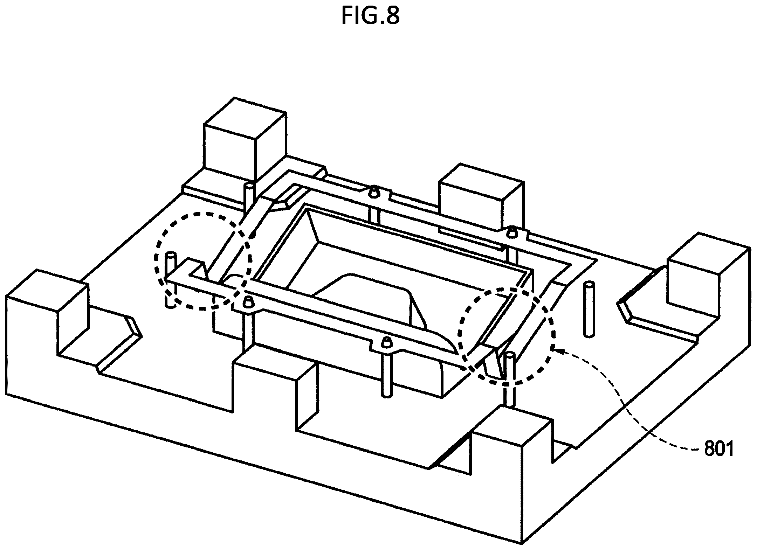

In a case where the molding material placement portion is movable in at least one of the horizontal direction and the up-down direction with respect to the lower mold, it is preferable that a height of the molding material placement portion after the movement changes in accordance with a height of the cavity forming surface of the lower mold. Fig. 8 shows the placement portion installation base that is changed in accordance with the height of the cavity forming surface of the lower mold.

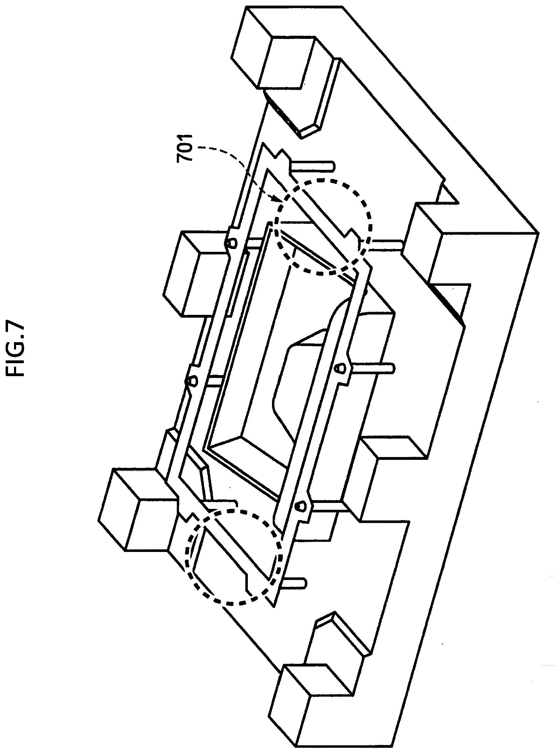

By changing the placement portion installation base from 701 in Fig. 7 to 801 in Fig. 8, the molding material can be placed to a shape close to a shape of the mold, so that it is possible to reduce fear that the molding material is excessively stretched and broken at the time of molding. In other words, even a thin-walled molding material can be sufficiently molded, so that an excess thickness portion of the molded body can be reduced.

[Relation between average plate thickness Tp of connection surface portion and average plate thickness Tm of molding material]

A relation between an average plate thickness Tp of the connection surface portion and an average plate thickness Tm of the molding material preferably satisfies Tp/Tm < 3. In the case of using a preferable molding method in the present invention, as schematically shown in Fig. 18, the molding material can be pressed without being bent in the cavity since the end portion of the specific molding material is fixed to the molding material placement portion. In this case, the relation between the average plate thickness Tp of the connection surface portion and the thickness Tm of the molding material may satisfy Tp/Tm < 3. Preferably, the relation satisfies Tp/Tm < 2. Here, of course, Tp and Tm are numerical values expressed in the same unit, and are often expressed in mm units.

A method of measuring the average plate thickness of the connection surface portion will be described later.

[Method for placing molding material]

It is preferable that the molding material covers the entire cavity forming surface of the lower mold in a plan view of the lower mold when the lower mold is placed on the molding material placement portion.

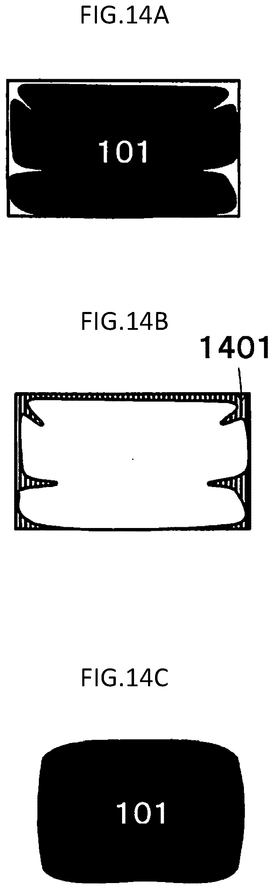

For example, when a molding material 101 shown in Fig. 14A is used, the entire cavity forming surface of the forming lower mold is not covered when the lower mold is viewed in a plan view. In the present specification, a material obtained by cutting a molding material in advance for preliminary shaping along the mold is referred to as a pattern-cut material.

In the case where the molding material 101 shown in Fig. 14A (a black portion in Fig. 14A) is used, when the molding material is preliminarily shaped along the mold, it is possible to satisfy Tp/Tm < 3. It is noted that, in this case, the following problems (i) to (iv) occur.

(i) A strict preliminary shaping process is required, and the process becomes complicated.

(ii) Since the molding material is in contact with the mold at the time of preliminary shaping, the shaping property and the flowability of the molding material are likely to be decreased when the cold press method is used.

(iii) In the case of using a molding material that has been subjected to complicated pattern-cut (in particular, pattern-cut such that a notch is formed inside the molding material), a weld portion having weak mechanical properties is generated in the molded body.

(iv) Since the molding material 101 in Fig. 14A is cut out from a rectangular material, a scrap material indicated by 1401 (hatched area) in Fig. 14B is generated.

On the other hand, the problems (i) to (iv) are solved when the molding material is press-molded by heating and softening the molding material as shown in Fig. 14C, placing the molding material on the molding material placement portion protruding from a portion other than the cavity forming surface of the lower mold, closing the upper mold and the lower mold in a state where at least a part of the outer peripheral region of the molding material placed on the molding material placement portion is fixed to the molding material placement portion. The molding material as shown in Fig. 14C covers the entire cavity forming surface of the lower mold when the lower mold is viewed in a plan view at the time of placing the lower mold on the molding material placement portion.

[Press direction]

The press molding in the present invention is preferably performed at an angle θ from the horizontal direction as shown in Fig. 13 so that the pressure from the upper mold and the lower mold can be easily applied to the entire molding material.

Example

Hereinafter, the present invention will be specifically described with reference to Examples, but the present invention is not limited thereto.

1. Raw materials used in the following Production Examples and Examples are as follows. A decomposition temperature is a measurement result by thermogravimetric analysis.

• Reinforcing fiber (PAN-based carbon fiber)

PAN-based carbon fiber "TENAX" (registered trademark) STS40-24K (average single fiber diameter: 7 $\mu$m) manufactured by Teijin Limited

•    Polyamide 6 (Hereafter, Polyamide 6 may be abbreviated as in some cases.).

Crystalline resin, melting point: 225°C, decomposition temperature (in air): 300°C
2. Values in the Examples were determined according to the following method.

(1) Analysis of carbon fiber volume fraction (Vf)

A molded body was burned in a furnace at 500°C for 1 hour to remove a thermoplastic resin, and a mass of carbon fiber and thermoplastic resin was calculated by weighing a mass of a sample before and after processing. Next, a volume fraction of the carbon fiber and the thermoplastic resin was calculated by using a specific gravity of each component. A carbon fiber volume fraction contained in a molding material is also represented by Vf (the following formula).

$$Vf = 100 \times \text{carbon fiber volume}/(\text{carbon fiber volume} + \text{thermoplastic resin volume})$$

(2) Analysis of weight average fiber length of carbon fibers contained in molded body

With respect to a weight average fiber length of the carbon fibers contained in the molded body, the thermoplastic resin was removed in a furnace at 500°C for about 1 hour, then lengths of 100 randomly extracted carbon fibers were measured and recorded to a unit of 1 mm with a caliper and a loupe, and the weight average fiber length (Lw) was determined by the following formula from the measured lengths of all the carbon fibers (Li, where i = an integer of 1 to 100).

$$Lw = (\Sigma Li^2)/(\Sigma Li)$$

The weight average fiber length of the carbon fibers contained in the molding material can also be measured by the same method as described above.

(3) In-Plane Dispersion of Carbon Fibers

From the obtained molded body, the following portions were cut out and heated, and it was examined whether the molding material was folded as shown in Fig. 17B. In the case where the molding material was folded, in-plane dispersion of the carbon fibers was "discontinuous", and in the case where the molding material was not folded, the in-plane dispersion was "continuous dispersion".
•    Boundary region (1601 in Fig. 16A) between first main shape surface portion and connection surface portion
•    Boundary region (1602 in Fig. 16A) between second main shape surface portion and connection surface portion
•    Boundary region (1603 in Fig. 16B) between first main shape surface portion and second main shape surface portion
•    Connection Surface Portion (1604 in Fig. 16C)

(4) Weld

An appearance of the molded body was observed, and a presence or absence of a weld was evaluated.

(5) Plate Thickness of Molded Body

A shape of the formed molded body is as shown in Fig. 12. Plate thicknesses at positions A to H in Fig. 12 were measured. From the measurement results, an average plate thickness (mm) of the molded body and a coefficient of variation of thickness of the molded body were obtained. An actually measured average plate thickness of the molded body with respect to a design plate thickness was obtained.

[Production Example 1 of molding material]

As reinforcing fibers, PAN-based carbon fibers "Tenax" (registered trademark) STS40-24K (average fiber diameter: 7 $\mu$m, number of single fibers: 24000) manufactured by Teijin Limited and cut to an average fiber length of 20 mm were used, and as a resin, Nylon 6 resin A1030 manufactured by Unitika Limited was used, and a molding material precursor which contains carbon fibers and a Nylon 6 resin and in which the carbon fibers were oriented two-dimensionally and randomly was prepared based on a method described in US patent No. 8946342 specification. The obtained molding material precursor was heated at 2.0 MPa for 5 minutes in a press machine heated to 260°C to obtain a molding material (i) having an average thickness of 2.2 mm. The carbon fiber volume fraction (Vf) was 35%, a fiber length of the carbon fibers was constant, and a weight average fiber length was 20 mm.

[Production Example 2 of molding material]

A molding material (ii) was obtained in the same manner as in Production Example 1 except that an average thickness of the molding material was 2.7 mm. In general, a thickness of the molded body after pressing is slightly smaller than that of the molding material.

[Example 1]

An upper mold and a lower mold for producing a molded body as an embodiment of a concept shown in Fig. 12 were prepared, and both of the upper mold and the lower mold were set to 150°C in advance. A specific shape of the molded body will be described below.

- An angle of a valley formed by a connection surface portion and a first main shape surface portion was 93 degrees.
- An angle of a valley formed by a connection surface portion and a second main shape surface portion was 96 degrees.
- An angle of a valley formed by the first main shape surface portion and the second main shape surface portion was 90 degrees.
- A protrusion amount of the connection surface portion from a virtual intersection line between the first main shape surface portion and the second main shape surface portion was 234 mm, which is 93.6 times a thickness 2.5 mm of the molded body.

The molding material (i) was cut into a rectangular shape, heated to 300°C using an IR oven, and stuck and fixed on (four) placement bases as shown by 901 in Fig. 9C, and the molding material was placed on a lower mold. The molding material covers an entire cavity forming surface of the lower mold when the lower mold is viewed in a plan view at the time of placing the lower mold on the molding material placement portion. The molding material was subjected to cold press molding without moving the placement base while lowering the upper mold to prepare a molded body. An evaluation of the obtained molded body was shown in Table 1.

[Example 2]

A molded body having a shape shown in Fig. 12 was produced in the same manner as in Example 1 except that the molding material (ii) was cut into a rectangular shape and stuck on (six) molding material placement bases shown in Fig. 9D, and thereafter, as shown in Figs. 19A, 19B, and 19C, that is, an upper mold was lowered and the molding material placement base was moved so as to approach a mold cavity. An evaluation of the obtained molded body was shown in Table 1. A position of the molding material placement base shown in Fig. 9D was a position after the movement.

[Example 3]

A molded body shown in Fig. 12 was produced in the same manner as in Example 2 except that a molding material was stuck on (eight) placement bases shown in Fig. 9E. An evaluation of the obtained molded body was shown in Table 1. As in Example 2, the molding material placement base shown in 903 in Fig. 9E is at a position after an upper mold is lowered and brought close to a mold cavity.

[Comparative Example 1]

A molded body shown in Fig. 12 was produced by cold press in the same manner as in Example 2 except that a molding material placement base was not provided on a lower mold and a molding material was directly placed on a lower mold. A result was shown in Table 1.

[Comparative Example 2]

A molded body shown in Fig. 12 was produced by cold press molding in the same manner as in Example 2 except that a molding material placement base was not provided on a lower mold, the molding material (ii) was pattern-cut as shown in Fig. 14A, and the molding material was accurately pre-shaped on the lower mold using a robot arm described in WO 2017/104857. A result was shown in Table 1. Since the pattern-cut was performed, a portion indicated by 1401 in Fig. 14B was generated as waste.

[Table 1]

| | Example 1 | Example 2 | Example 3 | Comparative Example 1 | Comparative Example 2 |
|---|---|---|---|---|---|
| Shape of molding material | Rectangle | Rectangle | Rectangle | Rectangle | Pattern-cut |
| Position of molding material placement portion | Fig. 9C | Fig. 9D | Fig. 9E | No | No |
| Movement of placement portion in up-down direction and horizontal direction | No | Yes | Yes | - | - |
| Angle of valley formed by first main shape surface portion and second main shape surface portion. | 90 degrees | 90 degrees | 90 degrees | 90 degrees | 90 degrees |
| Evaluation of molded body | | | | | |
| Weld | No | No | No | No | Yes |
| In-plane dispersion of carbon fibers | | | | | |
| Boundary region between first main shape surface portion and connection surface portion | Continuous dispersion | Continuous dispersion | Continuous dispersion | Discontinuous | Continuous dispersion |
| Boundary region between second main shape surface portion and connection surface portion | Continuous dispersion | Continuous dispersion | Continuous dispersion | Discontinuous | Discontinuous |
| Boundary region between first main shape surface portion and second main shape surface portion | Continuous dispersion | Continuous dispersion | Continuous dispersion | Continuous dispersion | Discontinuous |
| Connection surface portion | Continuous dispersion | Continuous dispersion | Continuous dispersion | Discontinuous | Continuous dispersion |
| Molded body plate thickness mm (Fig. 12) | | | | | |

(continued)

|  | Example 1 | Example 2 | Example 3 | Comparative Example 1 | Comparative Example 2 |
|---|---|---|---|---|---|
| A | 2.1 | 2.6 | 2.8 | 3.1 | 2.5 |
| B | 1.9 | 2.4 | 2.5 | 2.6 | 2.4 |
| C | 2.0 | 2.7 | 2.7 | 3.1 | 2.5 |
| D | 2.1 | 2.5 | 2.6 | 2.9 | 2.6 |
| E | 2.1 | 2.7 | 2.7 | 3.0 | 2.5 |
| F | 2.0 | 2.5 | 2.6 | 3.1 | 2.4 |
| G | 2.1 | 2.7 | 2.7 | 3.0 | 2.5 |
| H | 2.2 | 2.6 | 2.5 | 2.9 | 2.6 |
| Actual average plate thickness of molded body (mm) | 2.1 | 2.6 | 2.6 | 3.0 | 2.5 |
| Coefficient of variation of thickness of molded body | 4.4% | 4.4% | 4.0% | 5.7% | 3.0% |
| Molded body design plate thickness mm | 2.0 | 2.5 | 2.5 | 2.5 | 2.5 |
| Molded body actual average plate thickness/design plate thickness | 1.03 | 1.04 | 1.06 | 1.19 | 1.00 |

REFERENCE SIGNS LIST

101 Molding material
102 Upper mold
103 Lower mold
104 Molding cavity
201 Molding material placement portion (pin-shaped)
202 Auxiliary pin that is lowered after contact with upper mold (is moved in up-down direction in conjunction with molding material placement portion)
203 Arrow indicating operation direction of molding material placement portion 201 and auxiliary pin 202
301 First main shape surface portion
302 Second main shape surface portion
303 Connection surface portion
304 Edge-shaped surface portion
305 Edge-shaped surface portion
401 Cavity forming surface of lower mold
402 Non-cavity forming surface of lower mold
501 Base (placement portion installation base) for installing molding material placement portions, which are arranged so as to surround cavity forming surface of molding lower mold
601 Pin-shaped molding material placement base provided on placement portion placement base
701 Placement portion installation base which does not correspond to height of cavity forming surface of lower mold and whose height does not change
801 Placement portion installation base which changes in accordance with height of cavity forming surface of lower mold
901. 902. 903 Molding material placement portion
1001 Region where molding material is folded
1101 Region where molding material is not folded
1401 Remaining portion (scrap material, waste) of molding material (101 in Fig. 14A) taken out after pattern-cut
1501 Reinforcing fiber

1502 Molded body or molding material in which reinforcing fibers are dispersed in in-plane direction
1601 Boundary region between first main shape surface portion and connection surface portion
1602 Boundary region between second main shape surface portion and connection surface portion
1603 Boundary region between first main shape surface portion and second main shape surface portion
1604 Connection surface portion
1701 State where molding material is folded
1901 Direction in which placement portion is moved as upper mold is closed after molding material is placed
A, B, C, D, E, F, G and H Measurement locations of plate thicknesses of molded body 2001 Molded body

**Claims**

1. A molded body containing: reinforcing fibers having a weight average fiber length of 1 mm or more and 100 mm or less; and a thermoplastic resin, the molded body comprising:

   a first main shape surface portion;
   a second main shape surface portion connected to the first main shape surface portion in a state of intersecting the first main shape surface portion; and
   a connection surface portion connected to both the first main shape surface portion and the second main shape surface portion, the connection surface portion protruding from the first main shape surface portion and the second main shape surface portion on a side of a valley formed by the first main shape surface portion and the second main shape surface portion,
   wherein the reinforcing fibers are continuously dispersed in an in-plane direction in a boundary region between the first main shape surface portion and the connection surface portion and a boundary region between the second main shape surface portion and the connection surface portion.

2. The molded body according to claim 1,
   wherein the reinforcing fiber is a carbon fiber.

3. The molded body according to claim 1 or 2,
   wherein the connection surface portion is disposed between two regions where the first main shape surface portion and the second main shape surface portion are connected to each other.

4. The molded body according to any one of claims 1 to 3,
   wherein the reinforcing fibers are continuously dispersed in the in-plane direction in a boundary region between the first main shape surface portion and the second main shape surface portion.

5. The molded body according to any one of claims 1 to 4,
   wherein the reinforcing fibers are continuously dispersed in the in-plane direction in the connection surface portion.

6. The molded body according to any one of claims 1 to 5,
   wherein an angle of the valley formed by the first main shape surface portion and the second main shape surface portion is 45 degrees or more and 135 degrees or less.

7. The molded body according to any one of claims 1 to 6,
   wherein the connection surface portion includes a plurality of planar portions that are bend-connected.

8. The molded body according to any one of claims 1 to 7,
   wherein the connection surface portion includes a curved surface portion.

9. The molded body according to any one of claims 1 to 8,
   wherein a coefficient of variation of thickness is equal to or less than 5.5%.

10. The molded body according to any one of claims 1 to 9, further comprising:

    an edge-shaped surface portion facing the valley at least one of an end portion of the first main shape surface portion and an end portion of the second main shape surface portion,
    wherein the reinforcing fibers are continuously dispersed in the in-plane direction in a boundary region between the edge-shaped surface portion and the first main shape surface portion or in a boundary region between the edge-shaped surface portion and the second main shape surface portion.

11. The molded body according to any one of claims 1 to 10,
which is molded by using a sheet-shaped molding material.

12. The molded body according to any one of claims 1 to 11,
wherein an angle of a valley formed by the connection surface portion and at least one of the first main shape surface portion and the second main shape surface portion is more than 90 degrees and less than 180 degrees.

13. The molded body according to any one of claims 1 to 12,
wherein a maximum value of a protrusion amount of the connection surface portion from a virtual intersection line between the first main shape surface portion and the second main shape surface portion is 10 times or more a thickness of the molded body.

14. A method for producing a molded body containing reinforcing fibers and a thermoplastic resin, the method comprising:

placing a heat-softened molding material on a molding material placement portion protruding from a portion other than a cavity forming surface of a lower mold; and
closing an upper mold and the lower mold in a state where at least a part of an outer peripheral region of the molding material placed on the molding material placement portion is fixed to the molding material placement portion to press-mold the molding material.

15. The method for producing a molded body according to claim 14,
wherein the reinforcing fibers are carbon fibers having a weight average fiber length of 1 mm or more and 100 mm or less.

16. The method for producing a molded body according to claim 15,

wherein the molded body is the molded body according to any one of claims 1 to 13, and
the part of the outer peripheral region of the molding material to be fixed to the molding material placement portion is an outer peripheral region R1 of the molding material corresponding to an end portion of the first main shape surface portion, the end portion facing a portion connected to the second main shape surface portion.

17. The method for producing a molded body according to claim 16,
wherein the part of the outer peripheral region of the molding material to be fixed to the molding material placement portion is an outer peripheral region R2 of the molding material corresponding to an end portion of the second main shape surface portion, the end portion being substantially orthogonal to a portion where the first main shape surface portion and the second main shape surface portion are connected to each other.

18. The method for producing a molded body according to claim 16 or 17,
wherein a relation between an average plate thickness Tp of the connection surface portion and an average plate thickness Tm of the molding material satisfies Tp/Tm < 3.

19. The method for producing a molded body according to any one of claims 14 to 16,
wherein the molding material covers an entire cavity forming surface of the lower mold when the lower mold is viewed in a plan view at a time of placing the molding material on the molding material placement portion.

20. The method for producing a molded body according to any one of claims 14 to 17, wherein the molding material placement portion includes a plurality of planes, and at least one molding material placement portion is movable in at least one of a horizontal direction and an up-down direction with respect to the lower mold.

21. The method for producing a molded body according to claim 20,
wherein a height of the molding material placement portion after the movement changes in accordance with a height of the cavity forming surface of the lower mold.

## FIG.1

## FIG.2A

## FIG.2B

FIG.3A

301

303

302

FIG.3B

301

303

302

## FIG.3C

## FIG.3D

## FIG.3E

FIG.4

FIG.5

501

FIG.6

6 0 1

1 0 1

5 0 1

FIG.7

FIG.8

801

EP 3 904 066 A1

## FIG.9A

901

## FIG.9B

901

## FIG.9C

901

FIG.9D

902

FIG.9E

903

FIG.10

1001

FIG.11

1101

FIG.12

2 0 0 1

A

C

3 0 1

3 0 3

B

D

F

E

H

G

3 0 2

FIG.13

θ

FIG.14A

FIG.14B

1401

FIG.14C

FIG.15

FIG.16A

FIG.16B

FIG.16C

FIG.16D

FIG.16E

## FIG.17A

## FIG.17B

## FIG.18A

102

101

103

## FIG.18B

X  Z

# FIG.19A

# FIG.19B

# FIG.19C

<div align="center">**INTERNATIONAL SEARCH REPORT**</div>

| | International application No. |
|---|---|
| | PCT/JP2019/050301 |

**A. CLASSIFICATION OF SUBJECT MATTER**
Int.Cl. B29K101/12(2006.01)n, B29K105/08(2006.01)n, B29K105/12(2006.01)n, B29C43/34(2006.01)i, B29C70/06(2006.01)i, B29C70/42(2006.01)i
FI: B29C43/34, B29C70/06, B29C70/42, B29K101:12, B29K105:08, B29K105:12
According to International Patent Classification (IPC) or to both national classification and IPC

**B. FIELDS SEARCHED**

Minimum documentation searched (classification system followed by classification symbols)
Int.Cl. B29K101/12, B29K105/08, B29K105/12, B29C43/34, B29C70/06, B29C70/42

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2013/031860 A1 (TEIJIN LTD.) 07.03.2013 (2013-03-07), paragraphs [0024], [0025], [0125]-[0132], fig. 8, 11, 16 | 1-13<br>14-21 |
| Y<br>A | JP 2010-23466 A (TOYOTA BOSHOKU CORPORATION) 04.02.2010 (2010-02-04), paragraphs [0017]-[0023], [0026]-[0030], fig. 1, 2, 5-8 | 14-21<br>1-13 |
| Y | JP 2015-20296 A (TOYOTA BOSHOKU CORPORATION) 02.02.2015 (2015-02-02), paragraphs [0042]-[0045], fig. 7 | 14-21 |
| A | JP 60-124503 A (DAIKYO INC.) 03.07.1985 (1985-07-03), page 1, lower right column, line 6 to page 3, lower right column, line 14, fig. 3 | 1-14 |

☒ Further documents are listed in the continuation of Box C.     ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>06.03.2020 | Date of mailing of the international search report<br>17.03.2020 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

| | INTERNATIONAL SEARCH REPORT | International application No. |
|---|---|---|
| | | PCT/JP2019/050301 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2016-36963 A (HONDA MOTOR CO., LTD.) 22.03.2016 (2016-03-22), paragraphs [0012]-[0051], fig. 1-8 | 1-21 |
| A | JP 2017-196863 A (JAPAN STEEL WORKS LTD.) 02.11.2017 (2017-11-02), paragraphs [0012]-[0022], fig. 1-6 | 1-21 |

Form PCT/ISA/210 (second sheet) (January 2015)

<table>
<tr><td colspan="2" align="center"><strong>INTERNATIONAL SEARCH REPORT</strong><br>Information on patent family members</td><td>International application No.<br>PCT/JP2019/050301</td></tr>
</table>

```
WO 2013/031860 A1  07.03.2013    US 2014/0178631 A1
                                 paragraphs [0094]-[0096],
                                 [0288]-[0295], fig. 8, 11, 16
                                 EP 2752442 A1
                                 CN 103764729 A

JP 2010-23466 A    04.02.2010    (Family: none)

JP 2015-20296 A    02.02.2015    (Family: none)

JP 60-124503 A     03.07.1985    (Family: none)

JP 2016-36963 A    22.03.2016    (Family: none)

JP 2017-196863 A   02.11.2017    (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016043639 A
- JP 2016036963 A
- WO 2017110811 A
- JP H1076570 A
- US 8946342 B
- JP 2013049208 A
- WO 2017104857 A